# EUROPÄISCHE PATENTSCHRIFT

(11) **EP 2 736 159 B1**
(45) Veröffentlichungstag und Bekanntmachung des Hinweises auf die Patenterteilung: **11.04.2018**
(21) Anmeldenummer: 12194100.9
(22) Anmeldetag: 23.11.2012
(51) Int. Cl.: H02M 5/458, H02M 7/48

(54) **Umrichtersystem und Wind- oder Wasserenergieanlage**
Converter system and wind or water turbine
Système de convertisseur et installation éolienne ou hydraulique

(43) Veröffentlichungstag der Anmeldung: 28.05.2014
(73) Patentinhaber: Moog Unna GmbH, 59423 Unna (DE)
(72) Erfinder: Theopold, Tobias, 44263 Dortmund (DE); Pauli, Matthias, 33181 Bad Wünnenberg (DE); Ray, Opie, Orchard Park, NY 14127 (US)
(74) Vertreter: Schmalz, Günther

(56) Entgegenhaltungen:
- EP-A1- 2 148 417
- EP-A1- 2 276 165
- EP-A2- 0 923 184
- EP-A2- 2 096 747
- US-A1- 2006 109 701
- US-B2- 7 126 236

## Beschreibung

Die Erfindung betrifft ein Umrichtersystem mit einem Gleichrichter und mindestens zwei Wechselrichtern, wobei der Gleichrichter von einer Wechselstromquelle mit Energie versorgbar ist, der Gleichrichter zur Energieversorgung der Wechselrichter mit jedem der Wechselrichter über einen gemeinsamen Gleichstromkreis verbunden ist und jeder Wechselrichter mit jeweils einem elektrischen Verbraucher zur Energieversorgung des jeweiligen Verbrauchers verbindbar ist.

Die US 7,126,236 B2 offenbart ein Verfahren und ein System zur Energieversorgung von wenigstens einem Gleichstrommotor einer Windenergieanlage, wobei das System einen Brückengleichrichter, der mit einer Energiequelle verbunden ist, um eine Gleichspannung zu erzeugen und diese dem wenigstens einen Gleichstrommotor zur Verfügung zu stellen, und einen Zwischenkreiskondensator aufweist, der die Gleichspannung glättet und als Energiespeicher und Energiequelle für den wenigstens einen Gleichstrommotor fungiert. Ferner wird offenbart, dass eine Mehrzahl an Gleichstrommotoren verwendet wird, die von separaten Antriebssystemen mit Energie versorgt werden, wobei die Zwischenkreise dieser Antriebssysteme miteinander verbunden sind, so dass Energie zwischen diesen Zwischenkreisen ausgetauscht werden kann.

Die US 7,740448 B2 offenbart eine Vorrichtung zum Steuern des Anstellwinkels eines Rotorflügels einer Windkraftanlage, wobei die Vorrichtung aufweist: ein Anstellwinkel-Steuersystem, das einen MOSFET-basierenden Leistungsumformer aufweist; einen Gleichspannungskreis mit einem Gleichspannungskreiskondensator und dafür konfiguriert ist, über den MOSFET-basierenden Leistungsumrichter Energie an das Anstellwinkel-Steuersystem zu liefern; eine Quelle für Wechselstromeingangsenergie zum Liefern von Energie an die Gleichspannungskreis; und eine Reservebatterie, die dafür konfiguriert ist, keine Energie an den Gleichspannungskreis zu liefern, wenn volle Wechselstromeingangsenergie zur Verfügung steht; und wobei ferner die Vorrichtung dafür konfiguriert ist: in dem Gleichspannungskreiskondensator gespeicherte Energie zu nutzen, um während eines Verlustes oder Einbruchs von Wechselstromeingangsenergie über den MOSFET-basierenden Leistungsumrichter Energie an das Anstellwinkel-Steuersystem zu liefern; und Ladung auf dem Gleichspannungskreiskondensator unter Verwendung der Reservebatterie aufrechtzuerhalten, sobald die Spannung über dem Gleichspannungskreiskondensator während der Lieferung von Energie an das Anstellsteuersystem absinkt; wobei die Wechselstromquelle eine nichtregenerative Quelle ist, und der Gleichspannungskreis für mehrere Anstellwinkel-Motorsysteme gemeinsam ist; und wobei ferner die Aufrechterhaltung von Ladung auf dem Gleichspannungskreiskondensator unter Verwendung der geladenen Reservebatterie ferner die Zuführung von Strom aus der Reservebatterie zu dem gemeinsamen Gleichspannungskreis umfasst.

US 2006/109701 A1 offenbart ein Verfahren und ein System zur Erzeugung gesteuerter Frequenzleistung von einer Quelle mit variabler Frequenzleistung. Der Schaltkreis zur Bereitstellung dieser Leistung mit kontrollierter Frequenz umfasst dabei einen Wechselstrombus verbunden mit einer Leistungsquelle mit variabler Frequenz und eine Mehrzahl an Lastschaltkreise zur Verbindung des Busses mit den Lasten, wobei jeder Lastschaltkreis einen Wechselstromeingang zum Bus und einen Wechselstromausgang zur Last, ein Wechselstromschütz zwischen Eingang und Ausgang, einen Gleichrichter zwischen Schütz und Ausgang und einen Wechselrichter zwischen Gleichrichter und Ausgang umfasst.

EP 2 096 747 A2 offenbart eine Motorantriebsvorrichtung mit einem Lade-/Entlade-Steuerschaltkreis zur Steuerung der Auf- oder Entladung eines Kondensators, wobei der Steuerschaltkreis parallel zwischen einem Gleichrichter und einem Wechselrichter angeordnet ist, und mit einer Stromsteuerungseinheit zur Steuerung eines Entladestroms des Lade-/Entlade-Steuerschaltkreises, die dabei den Entladestrom des Lade-/Entlade-Steuerschaltkreises basierend auf dem Eingangsstrom des Wechselrichter oder dem Ausgangsstrom des Gleichrichters so steuert, dass der Ausgangstrom des Gleichrichters gleich einem vorbestimmten Wert ist.

EP 2 148 417 A1 offenbart eine Stromrichterschaltungsanordnung für die Umwandlung einer von einem Generator mit variierender Ausgangsleistung erzeugten DC-Spannung im Mittelspannungsbereich in eine Wechselspannung zur Einspeisung in ein Energieversorgungsnetz, mit mehreren in Reihe geschalteten Stromrichtern, die dem Generator parallel geschaltet sind, sowie einen steuerbaren Überbrückungsschalter für jeden Stromrichter, wobei der Überbrückungsschalter in einem Gleichspannungszwischenkreis liegt und den Stromrichter in geschlossenem Zustand überbrückt, soll für ein Photovoltaikgenerator eingesetzt werden. Dies wird dadurch erreicht, dass zwischen jedem Stromrichter und dem Generator ein Widerstands-Chopper geschaltet ist, wobei keine Eingangsdiode im Strompfad vom Generator zum Stromrichter vorhanden ist, sowie jeder Überbrückungsschalter parallel zum Widerstand-Chopper im Gleichpannungszwischenkreis angeschlossen ist. vorgenannte Stand der Technik weist den Nachteil auf, dass zum Beispiel bei einem Kurzschluss im Zwischenkreis, insbesondere im Zwischenkreiskondensator einer der Antriebsysteme, sich alle Zwischenkreise über diesen Kurzschluss vollständig entladen können, so dass keiner der Motoren mehr mit elektrischer Energie aus dem Antriebssystem versorgt werden kann. Dies ist insbesondere problematisch bei Motoren, die nicht mit Gleichstrom betreibbar sind, da Gleichstrommotoren alternativ zu dem Betrieb über das Antriebssystem direkt auf eine Batterie oder einen Kondensator geschaltet werden können, um im Notfall zumindest mit der in der Batterie bzw. in dem Kondensator gespeicherten Energie für einen begrenzten Zeitraum betrieben zu werden. Wohingegen dies bei Wechselstrommotoren nicht ohne Weiteres möglich ist.

Die Erfindung betrifft eine Wind- oder Wasserenergieanlage nach Anspruch 1. Damit ist es die Aufgabe der Erfindung, ein Umrichtersystem und eine Wind- oder Wasserenergieanlage anzugeben, die besonders zuverlässig sind.

Die zuvor hergeleitete und aufgezeigte Aufgabe ist ausgehend von dem eingangs beschriebenen Umrichtersystem dadurch gelöst, dass in wenigstens einer der Verbindungen zwischen dem Gleichstromkreis und einem der Wechselrichter eine Entkopplungseinrichtung angeordnet ist, wobei die Entkopplungseinrichtung verhindert, dass elektrische Energie ausgehend von dem Wechselrichter in Richtung des Gleichstromkreises übertragen wird. Überraschenderweise hat sich herausgestellt, dass das erfindungsgemäße Umrichtersystem wesentliche Vorteile gegenüber dem aus dem Stand der Technik bekannten Systemen aufweist. Insbesondere ist durch die Entkopplung der Wechselrichter von dem Gleichstromkreis, und somit auch voneinander, jeder Wechselrichter vor

Störungen geschützt, die in den andere ponenten auftreten. Ohne die Entkopplungseinrichtungen würde sich beispielsweise ein Kurzschluss auf der Gleichspannungsseite eines Wechselrichters über den Gleichstromkreis direkt auf alle weiteren Wechselrichter auswirken.

Gemäß einer vorteilhaften Weiterbildung der Erfindung ist vorgesehen, dass die Entkopplungseinrichtung oder wenigstens eine der Entkopplungseinrichtungen wenigstens eine Diode aufweist. Insbesondere ist es vorteilhaft, wenn die Entkopplungseinrichtung oder wenigstens eine der Entkopplungseinrichtungen durch wenigstens eine Diode gebildet wird. Durch die Verwendung von einer oder einer Mehrzahl in Reihe geschalteter Dioden wird eine sichere Entkopplung des einen oder der mehreren Wechselrichter von dem Gleichstromkreis erreicht, so dass ein Energietransfer von dem einen oder den mehreren Wechselrichtern zurück in den Gleichstromkreis verhindert ist.

Eine vorteilhafte Ausgestaltung der Erfindung zeichnet sich dadurch aus, dass wenigstens einer der Wechselrichter einen Notenergiespeicher aufweist, wobei der Wechselrichter durch den Notenergiespeicher mit elektrischer Energie versorgbar ist. Durch das Vorsehen eines Notenergiespeichers ist es möglich den jeweiligen Wechselrichter mit in dem Notenergiespeicher gespeicherter elektrischer Energie zu versorgen. Hierdurch kann im Notfall, zum Beispiel bei einem Ausfall der Energieversorgung des Wechselrichters über den Gleichstromkreis, der Wechselrichter zumindest für einen begrenzten Zeitraum den elektrischen Verbraucher mit Energie aus dem Notenergiespeicher versorgen, so dass insbesondere eine im Notfall gewünschte oder sogar zwingend erforderliche Reaktion des elektrischen Verbrauchers möglich ist. Eine derartige gewünschte oder erforderliche Reaktion des elektrischen Verbrauchers ist zum Beispiel im Falle einer Windenergieanlage eine sogenannte Notfahrt. Hierbei werden möglichst alle Rotorblätter der Windenergieanlage aus dem Wind gedreht, so dass Sie keine Energie mehr aus der Luftströmung aufnehmen, sondern durch aerodynamische Bremsung den Rotor der Windenergieanlage allmählich zum Stillstand bringen.

Gemäß einer besonders vorteilhaften Weiterbildung der Erfindung ist vorgesehen, dass der eine Notenergiespeicher oder wenigstens einer der mehreren Notenergiespeicher durch Kondensatoren, insbesondere durch Ultrakondensatoren gebildet wird. Kondensatoren und vor allem Ultrakondensatoren haben sich als besonders vorteilhaft in der Anwendung in Umrichtersystemen erwiesen. Durch die hohe Speicherkapazität bei geringem Volumen und eine deutlich höhere Lebensdauer, sind sie den üblicherweise verwendeten Batterien deutlich überlegen. Insbesondere kann der Notenergiespeicher durch einen einzelnen Kondensator oder eine Mehrzahl an Kondensatoren gebildet werden.

Bei einer bevorzugten Ausgestaltung der Erfindung ist vorgesehen, dass der eine Notenergiespeicher oder wenigstens einer der mehreren Notenergiespeicher unmittelbar mit einem Zwischenkreiskondensator des jeweiligen Wechselrichters verbunden ist. Durch diese direkte Verbindung zwischen dem Zwischenkreiskondensator des jeweiligen Wechselrichters und dem Notenergiespeicher kann elektrische Energie, die in bestimmten Betriebssituationen von dem elektrischen Verbraucher an den Wechselrichter abgegeben und von diesem gleichgerichtet wird, in den Notenergiespeicher geleitet und gespeichert werden. Ferner wird durch die unmittelbare Anbindung des Notenergiespeichers an den Zwischenkreiskondensator erreicht, dass der Zwischenkreiskondensator relativ klein, d. h. mit geringer Kapazität, ausgelegt sein kann, da der Notenergiespeicher die Aufgaben des Zwischenkreiskondensators zumindest teilweise übernimmt. Insbesondere kann in einer weiteren Ausgestaltung der Erfindung der Zwischenkreiskondensator verschwindend klein ausgestaltet sein, sprich es kann auf ihn verzichtet werden. In diesem Fall fungiert der Notenergiespeicher als Zwischenkreiskondensator und ersetzt diesen.

Gemäß einer weiteren bevorzugten Ausgestaltung der Erfindung ist vorgesehen, dass die Ausgangsspannung des Gleichrichters an die nominale Spannung des einen Notenergiespeichers oder der mehreren Notenergiespeicher angepasst ist. Auf diese Weise kann auf eine externe Ladeeinrichtung für den einen oder die mehreren Notenergiespeicher verzichtet werden, da der eine oder die mehreren Notenergiespeicher durch die Energie geladen werden können, die von dem Gleichrichter in den Gleichstromkreis gespeist und von hieraus in die Wechselrichter geleitet wird.

Darüber hinaus ist es vorteilhaft, wenn der Gleichrichter eingangsseitig einen Überspannungsschutz aufweist. Hierdurch wir das komplette Umrichtersystem vor Überspannungen geschützt, die von der Wechselstromquelle ausgehen. Insbesondere ist das Umrichtersystem hierdurch vor induktiv in die Wechselstromquelle eingekoppelte Überspannungen geschützt, wie sie zum Beispiel durch Blitzeinschläge hervorgerufen werden können.

Gemäß einer weiteren bevorzugten Weiterbildung der Erfindung ist vorgesehen, dass der Gleichrichter eine speicherprogrammierbare Steuerung aufweist. Die speicherprogrammierbare Steuerung kann insbesondere der Steuerung des Gleichrichters und/oder der Wechselrichter dienen.

Bei einer vorteilhaften Ausgestaltung der Erfindung ist vorgesehen, dass der Gleichrichter und/oder wenigstens einer der Wechselrichter eine Feldbusschnittstelle aufweist. Über die Feldbusschnittstelle ist eine Kommunikationsmöglichkeit mit anderen Systemen gegeben. Ein solches anderes System kann insbesondere eine übergeordnete Steuerungseinrichtung sein. Bei einer Windenergieanlage zum Beispiel wird eine derartige übergeordnete Steuerungseinrichtung durch die Anlagensteuerung gebildet, die insbesondere Sollwerte für die Stellung der Rotorblätter vorgibt, wobei die Einhaltung der Sollwerte von dem Umrichtersystem überwacht und durch eine entsprechende Ansteuerung von mit den Wechselrichtern verbundenen elektrischen Verbrauchern, insbesondere elektrischen Motoren, sichergestellt wird.

Gemäß einer weiteren vorteilhaften Ausgestaltung der Erfindung ist vorgesehen, dass die Stromaufnahme des Gleichrichters begrenzt ist. Eine derartige Begrenzung kann sowohl durch eine Strombegrenzungseinrichtung erreicht werden, die zum Beispiel wenigstens einen Widerstand aufweist, aber auch durch eine entsprechende Steuerung des Gleichrichters erreicht werden, wie es zum Beispiel bei einem steuerbaren Brückengleichrichter mit einer entsprechenden begrenzenden Stromregelung möglich ist.

Bei einer besonders vorteilhaften Ausgestaltung der Erfindung ist vorgesehen, dass wenigstens einer der Verbraucher ein Wechselstrommotor oder ein Gleichstrommotor ist.

Die zuvor hergeleitete und aufgezeigte Aufgabe ist ausgehend von der eingangs beschriebenen Wind- oder Wasserenergieanlage ferner dadurch gelöst, dass die Wind- oder Wasserenergieanlage ein Umrichtersystem nach einem der Ansprüche 1 bis 11 aufweist, wobei das Umrichtersystem die Verbraucher mit Energie versorgt. Bei einer derartigen Wind- oder Wasserenergieanlage ist das Umrichtersystem ein Teil des sogenannten Pitchsystems, dass für die Drehung der Rotorblätter um ihre jeweilige Längsachse verantwortlich ist. Die elektrischen Verbraucher werden in der Regel durch Wechsel- oder Gleichstrommotoren gebildet.

Im Einzelnen gibt es nun eine Vielzahl von Möglichkeiten, das erfindungsgemäße Umrichtersystem und die Wind- oder Wasserenergieanlage auszugestalten und weiterzubilden. Dazu wird auf die dem Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen.

In der Zeichnung zeigt
Fig. 1 schematisch das erfindungsgemäße Umrichtersystem einer bevorzugten Weiterbildung der Erfindung und
Fig. 2 schematisch einen Teil des erfindungsgemäßen Umrichtersystems nach einer weiteren Ausgestaltung der Erfindung.

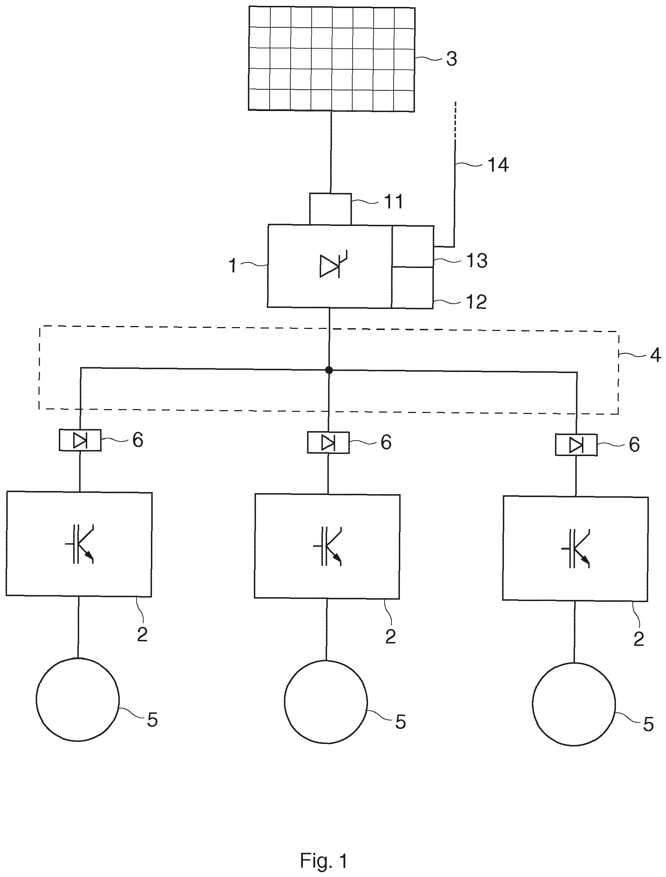

Die Fig. 1 zeigt das erfindungsgemäße Umrichtersystem mit einem Gleichrichter 1 und drei Wechselrichtern 2. Der Gleichrichter 1 ist mit einer Wechselstromquelle 3 verbunden, die beispielsweise durch das Stromnetz gebildet werden kann. Der Gleichrichter 1 richtet den von der Wechselstromquelle 3 bereitgestellten dreiphasigen Wechselstrom gleich und stellt ihn über einen Gleichstromkreis 4 den Wechselrichtern 2 zur Verfügung. Die Wechselrichter 2 sind mit elektrischen Verbrauchern 5 verbunden, die von den Wechselrichtern 2 mit Energie versorgt werden. Die elektrischen Verbraucher 5 können zum Beispiel Gleichstrommotoren oder Wechselstrommotoren umfassen. In jeder Verbindung eines Wechselrichters 2 mit dem Gleichstromkreis 4 ist eine Entkopplungseinrichtung 6 angeordnet, die verhindert, dass elektrische Energie ausgehend von dem Wechselrichter 2 in Richtung des Gleichstromkreises 4 übertragen wird. Eingangsseitig weist der Gleichrichter 1 einen Überspannungsschutz 11 auf, der das erfindungsgemäße Umrichtersystem vor Überspannungen aus der Gleichspannungsquelle 3 schützt.

Der Gleichrichter 1 weist ferner eine speicherprogrammierbare Steuerung 12 und eine Feldbusschnittstelle 13 auf, über die der Gleichrichter an einen Feldbus 14 zur Kommunikation mit einer übergeordneten Steuerung (nicht dargestellt) anschließbar ist. Die speicherprogrammierbare Steuerung 12 enthält insbesondere Software zur Steuerung des Gleichrichters 1 und der Wechselrichter 2.

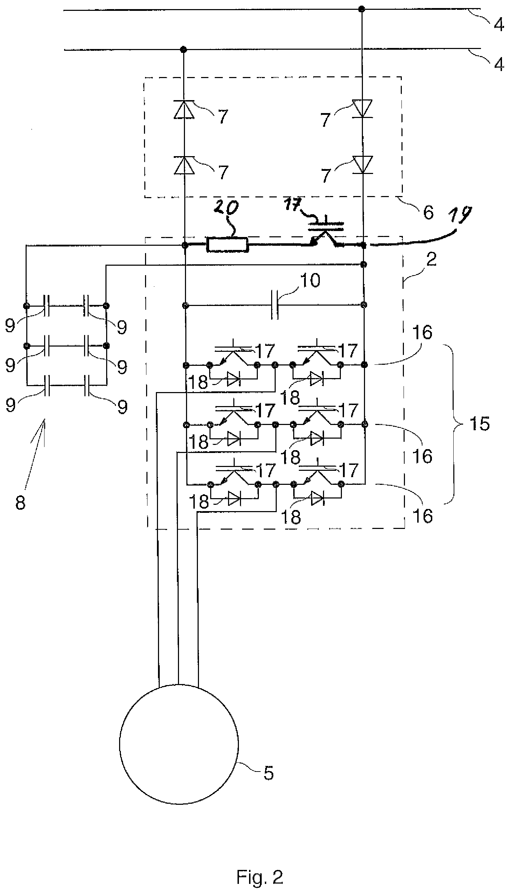

Fig. 2 zeigt einen Teil des erfindungsgemäßen Umrichtersystems nach einer weiteren Ausgestaltung der Erfindung. An den Gleichstromkreis 4, der nur teilweise gezeigt ist, ist über die Entkopplungseinrichtung 6 der Wechselrichter 2 angeschlossen. Die Entkopplungseinrichtung 6 wird durch vier Dioden 7 gebildet, die in den Verbindungsleitungen zwischen dem Wechselrichter 2 und dem Gleichstromkreis 4 angeordnet sind. Hierbei sind in jeder der Verbindungsleitungen zwei Dioden 7 derart in Reihe geschaltet, dass keine elektrische Energie ausgehend von dem Wechselrichter 2 in Richtung des Gleichstromkreises 4 übertragen werden kann. Der Wechselrichter 2 weist einen Zwischenkreiskondensator 10 auf, der über die Entkopplungseinrichtung 6 mit Energie aus dem Gleichstromkreis 4 aufladbar ist. Unmittelbar an den Zwischenkreiskondensator 10 ist ein Notenergiespeicher 8 angeschlossen. Der Notenergiespeicher 8 weist eine Mehrzahl an Kondensatoren 9 auf. Vorzugsweise sind mehrere in Reihe geschaltete Kondensatoren 9 zu Baueinheiten zusammengefasst, wobei mehrere solcher Baueinheiten in Parallelschaltung den Notenergiespeicher 8 bilden. Der in der Fig. 2 dargestellte Notenergiespeicher 8 wird aus drei solchen Baueinheiten zu je zwei Kondensatoren 9 gebildet.

Der Wechselrichter 2 weist ferner einen Brückenanordnung 15 auf, mit der der Wechselrichter 2 mit dem elektrischen Verbraucher 5 verbunden ist. Die Brückenanordnung 15 weist drei Brücken 16 auf, die durch je zwei in Reihe geschaltete Transistoren 17 gebildet werden, wobei zu jedem Transistor 17 eine Freilaufdiode 18 parallel geschaltet ist. Vorzugsweise werden die Transistoren 17 durch Bipolartransistoren mit isolierter Gate-Elektrode gebildet, die auch als IGBT (insulated-gate bipolar transistor) bezeichnet werden. Die Freilaufdioden 17 ermöglichen, dass Energie von dem elektrischen Verbraucher 5 zurück in den Zwischenkreiskondensator 10 und in den Notenergiespeicher 8 gespeist werden kann. Dies kann zum Beispiel der Fall sein, wenn der elektrische Verbraucher 5 durch einen Elektromotor gebildet wird, der zumindest kurzzeitig als Generator betrieben wird. Für den Fall, dass der elektrische Verbraucher 5 mehr Energie über die Brückenanordnung 15 in den Zwischenkreiskondensator 10 und den Notenergiespeicher 8 zurück speist, als diese sicher aufnehmen können, ist ein Bremschopper 19 vorgesehen. Mittels des Bremschoppers 19 kann elektrische Energie aus dem Zwischenkreiskondensator 10 und dem Notenergiespeicher 8 in Wärmeenergie umgewandelt werden. Hierzu weist der Bremschopper 19 einen Transistor 17 und einen Bremswiderstand 20 auf. Sobald der Transistor 17 leitend geschaltet wird fließt ein Strom durch den Transistor 17 und den Bremswiderstand 20. Hierbei kommt es zu einer Erwärmung des Bremswiderstands 20. Steigt die Spannung im Zwischenkreiskondensator 10 und/oder in dem Notenergiespeicher 8 über einen festgelegten Grenzwert wird der Transistor 17 leitend geschaltet und der hierdurch ermöglichte Stromfluss wirkt einem weiteren Anstieg der Spannung entgegen. Zur Überwachung der Spannung im Zwischenkreiskondensator 10 und/oder in dem Notenergiespeicher 8 ist wenigstens in einer dieser Komponenten ein Spannungssensor vorgesehen. In einer besonders vorteilhaften Ausgestaltung wird der speicherprogrammierbaren Steuerung 12 der Messwert des Spannungssensors zugeführt und der Transistor 17 des Bremschoppers 19 ist durch die speicherprogrammierbare Steuerung 12 betätigbar.

Zwischen den jeweils in Reihe geschalteten Transistoren jeder Brücke entspringt jeweils eine Verbindungsleitung zu dem dem Wechselrichter 2 zugeordneten elektrischen Verbraucher 5. Über die Brückenanordnung 15 kann die im Zwischenkreiskondensator 10 und die im Notenergiespeicher 8 zwischengespeicherte Energie durch eine entsprechende Ansteuerung der Transistoren 17 dem elektrischen Verbraucher 5 zum Beispiel in Form von Wechselstrom zur Verfügung gestellt werden.

### Bezugszeichenliste

- 1: Gleichrichter
- 2: Wechselrichter
- 3: Wechselstromquelle
- 4: Gleichstromkreis
- 5: Elektrischer Verbraucher
- 6: Entkopplungseinrichtung
- 7: Diode
- 8: Notenergiespeicher
- 9: Kondensator
- 10: Zwischenkreiskondensator
- 11: Überspannungsschutz
- 12: speicherprogrammierbare Steuerung
- 13: Feldbusschnittstelle
- 14: Feldbus
- 15: Brückenanordnung
- 16: Brücke
- 17: Transistor
- 18: Freilaufdiode
- 19: Bremschopper
- 20: Bremswiderstand

## Patentansprüche

1. Wind- oder Wasserenergieanlage mit einem Rotor, wobei der Rotor eine Rotornabe und wenigstens zwei Rotorblätter aufweist und die Rotorblätter durch elektrische Verbraucher (5) um ihre jeweilige Längsachse drehbar sind, wobei die Wind- oder Wasserenergieanlage ein Umrichtersystem zur Versorgung der Verbraucher mit Energie aufweist, wobei das Umrichtersystem einen Gleichrichter (1) und mindestens zwei Wechselrichtern (2) umfasst, wobei der Gleichrichter (1) von einer Wechselstromquelle (3) mit Energie versorgbar ist, der Gleichrichter (1) zur Energieversorgung der Wechselrichter (2) mit jedem der Wechselrichter (2) über einen gemeinsamen Gleichstromkreis (4) verbunden ist und jeder Wechselrichter (2) mit jeweils einem elektrischen Verbraucher (5) zur Energieversorgung des jeweiligen Verbrauchers (5) verbindbar ist, **dadurch gekennzeichnet, dass** in wenigstens einer der Verbindungen zwischen dem Gleichstromkreis (4) und einem der Wechselrichter (2) eine Entkopplungseinrichtung (6) angeordnet ist, wobei die Entkopplungseinrichtung (6) verhindert, dass elektrische Energie ausgehend von dem Wechselrichter (2) in Richtung des Gleichstromkreises (4) übertragen wird und wenigstens einer der Wechselrichter (2) einen Notenergiespeicher (8) aufweist, wobei der Wechselrichter (2) durch den Notenergiespeicher (8) mit elektrischer Energie versorgbar ist.

2. Wind- oder Wasserenergieanlage nach Anspruch 1, **dadurch gekennzeichnet, dass** die Entkopplungseinrichtung (6) oder wenigstens eine der Entkopplungseinrichtungen (6) wenigstens eine Diode (7) aufweist.

3. Wind- oder Wasserenergieanlage nach einem der Ansprüche 1 oder 2, **dadurch gekennzeichnet, dass** der Notenergiespeicher so dimensioniert ist, dass zumindest die Drehung der Rotorblätter der Windenergieanlage aus dem Wind zur Ausführung einer Notfahrt ermöglicht wird.

4. Wind- oder Wasserenergieanlage nach Anspruch 3, **dadurch gekennzeichnet, dass** der eine Notenergiespeicher (8) oder wenigstens einer der mehreren Notenergiespeicher (8) durch Ultrakondensatoren gebildet wird.

5. Wind- oder Wasserenergieanlage nach Anspruch 4, **dadurch gekennzeichnet, dass** der eine Notenergiespeicher (8) oder wenigstens einer der mehreren Notenergiespeicher (8) unmittelbar mit einem Zwischenkreiskondensator (10) des jeweiligen Wechselrichters (2) verbunden ist.

6. Wind- oder Wasserenergieanlage nach Anspruch 5, **dadurch gekennzeichnet, dass** der Wechselrichter so ausgestaltet ist, dass Energie vom elektrischen Verbraucher zurück in den Zwischenkreiskondensator und den Notenergiespeicher gespeist werden kann.

7. Wind- oder Wasserenergieanlage nach Anspruch 6, **dadurch gekennzeichnet, dass** in dem Wechselrichter ein Bremschopper umfassend einen Transistor und einen Bremswiderstand angeordnet ist, um die von dem Verbraucher zurückgespeiste Energie, die nicht vom Notenergiespeicher oder Zwischenkreiskondensator aufgenommen werden kann, in Wärmeenergie umzuwandeln.

8. Wind- oder Wasserenergieanlage nach einem der Ansprüche 3 bis 7, **dadurch gekennzeichnet, dass** die Ausgangsspannung des Gleichrichters (1) an die nominale Spannung des einen Notenergiespeichers (8) oder der mehreren Notenergiespeicher (8) angepasst ist.

9. Wind- oder Wasserenergieanlage nach einem der Ansprüche 1 bis 8, **dadurch gekennzeichnet, dass** der Gleichrichter (1) eingangsseitig einen Überspannungsschutz (11) aufweist.

10. Wind- oder Wasserenergieanlage nach einem der Ansprüche 1 bis 9, **dadurch gekennzeichnet, dass** der Gleichrichter (1) eine speicherprogrammierbare Steuerung (12) aufweist.

11. Wind- oder Wasserenergieanlage nach einem der Ansprüche 1 bis 10, **dadurch gekennzeichnet, dass** der Gleichrichter (1) und/oder wenigstens einer der Wechselrichter (2) eine Feldbusschnittstelle (13) aufweist.

12. Wind- oder Wasserenergieanlage nach einem der Ansprüche 1 bis 11, **dadurch gekennzeichnet, dass** die Stromaufnahme des Gleichrichters (1) begrenzt ist.

13. Wind- oder Wasserenergieanlage nach einem der Ansprüche 1 bis 11, **dadurch gekennzeichnet, dass** wenigstens einer der Verbraucher (5) ein Wechselstrommotor oder ein Gleichstrommotor ist.

## Claims

1. A wind or water turbine with a rotor, wherein the rotor has a rotor hub and at least two rotor blades and the rotor blades can be rotated around their respective longitudinal axis by electric consuming units (5), wherein the wind or water turbine has a converter system for supplying the consuming units with energy, wherein the converter system comprises a rectifier (1) and at least two inverters (2), wherein the rectifier (1) can be supplied with power by an alternating current source (3), the rectifier (1) is connected to each of the inverters (2) via a common direct-current circuit (4) in order to supply energy to the inverter (2), and each inverter (2) can be connected to an electric consuming unit (5) to supply energy to the respective consuming unit (5), **characterized in that** a decoupling mechanism (6) is arranged in at least one of the connections between the direct-current circuit (4) and one of the inverters (2), wherein the coupling mechanism (6) prevents electric energy from being transferred from the inverter (2) in the direction of the direct-current circuit (4), and at least one of the inverters (2) has an emergency energy store (8), wherein the inverter (2) can be supplied with electric energy by the emergency energy store (8).

2. The wind or water turbine according to claim 1, **characterized in that** the decoupling mechanism (6) or at least one of the decoupling mechanisms (6) has at least one diode (7).

3. The wind or water turbine according to either claim 1 or 2, **characterized in that** the emergency energy store is dimensioned such that at least the rotation of the rotor blades of the wind turbine is enabled from the wind in order to execute an emergency movement.

4. The wind or water turbine according to claim 3, **characterized in that** the one emergency energy store (8) or at least one of the multiple emergency energy stores (8) is formed from ultra-capacitors.

5. The wind or water turbine according to claim 4, **characterized in that** the one emergency energy store (8) or at least one of the multiple emergency energy stores (8) is connected directly to an intermediate circuit capacitor (10) of the respective inverter (2).

6. The wind or water turbine according to claim 5, **characterized in that** the inverter is designed such that energy from the electric consuming unit can be fed back into the intermediate circuit capacitor and the emergency energy store.

7. The wind or water turbine according to claim 6, **characterized in that** a brake chopper comprising a transistor and a brake resistor is arranged in the inverter in order to convert the energy fed back by the consuming unit, which cannot be accommodated by the emergency energy store or the intermediate circuit capacitor, into thermal energy.

8. The wind or water turbine according to any of claims 3 to 7, **characterized in that** the starting voltage of the rectifier (1) is adapted to the nominal voltage of the one emergency energy store (8) or the multiple emergency energy stores (8).

9. The wind or water turbine according to any of claims 1 to 8, **characterized in that** the rectifier (1) has overvoltage protection (11) on the input side.

10. The wind or water turbine according to any of claims 1 to 9, **characterized in that** the rectifier (1) has a memory-programmable control (12).

11. The wind or water turbine according to any of claims 1 to 10, **characterized in that** the rectifier (1) and/or at least one of the inverters (2) has a fieldbus interface (13).

12. The wind or water turbine according to any of claims 1 to 11, **characterized in that** the current consumption of the rectifier (1) is limited.

13. The wind or water turbine according to any of claims 1 to 11, **characterized in that** at least one of the consuming units (5) is an alternating-current motor or a direct-current motor.

## Revendications

1. Installation d'énergie éolienne ou hydraulique, présentant un rotor, le rotor présentant un moyeu de rotor et au moins deux pales de rotor et les pales de rotor pouvant être mises en rotation par des consommateurs électriques (5) autour de leur axe longitudinal respectif, l'installation d'énergie éolienne ou hydraulique présentant un système convertisseur pour alimenter les consommateurs en énergie, le système convertisseur comprenant un redresseur (1) et au moins deux onduleurs (2), le redresseur (1) pouvant être alimenté en énergie par une source (3) de courant alternatif, le redresseur (1) étant raccordé, pour l'alimentation en énergie des onduleurs (2), à chacun des onduleurs (2) via un circuit (4) à courant continu commun et chaque onduleur (2) pouvant être raccordé respectivement à un consommateur électrique (5) pour l'alimentation en énergie du consommateur (5) respectif, **caractérisée en ce qu'un** dispositif de découplage (6) est disposé dans au moins un des raccordements entre le circuit (4) à courant continu et un des onduleurs (2), le dispositif de découplage (6) empêchant le transfert d'énergie électrique depuis l'onduleur (2) vers le circuit (4) à courant continu et au moins un des onduleurs (2) présente un accumulateur (8) d'énergie de secours, l'onduleur (2) pouvant être alimenté en énergie électrique par l'accumulateur (8) d'énergie de secours.

2. Installation d'énergie éolienne ou hydraulique selon la revendication 1, **caractérisée en ce que** le dispositif de découplage (6) ou au moins un des dispositifs de découplage (6) présente au moins une diode (7).

3. Installation d'énergie éolienne ou hydraulique selon une des revendications 1 ou 2, **caractérisée en ce que** l'accumulateur d'énergie de secours est dimensionné de manière telle qu'au moins la rotation des pales de rotor de l'installation d'énergie éolienne à l'abri du vent pour la réalisation d'un trajet de secours est rendue possible.

4. Installation d'énergie éolienne ou hydraulique selon la revendication 3, **caractérisée en ce que** ledit un accumulateur (8) d'énergie de secours ou au moins un desdits plusieurs accumulateurs (8) d'énergie de secours est formé par des ultracondensateurs.

5. Installation d'énergie éolienne ou hydraulique selon la revendication 4, **caractérisée en ce que** ledit un accumulateur (8) d'énergie de secours ou au moins un desdits plusieurs accumulateurs (8) d'énergie de secours est raccordé directement à un condensateur (10) de circuit intermédiaire de l'onduleur (2) respectif.

6. Installation d'énergie éolienne ou hydraulique selon la revendication 5, **caractérisée en ce que** l'onduleur est conçu de manière telle que le consommateur électrique peut injecter de l'énergie en retour dans le condensateur de circuit intermédiaire et l'accumulateur d'énergie de secours.

7. Installation d'énergie éolienne ou hydraulique selon la revendication 6, **caractérisée en ce qu'**un hacheur de freinage, comprenant un transistor et une résistance au freinage, est disposé dans l'onduleur, afin de transformer l'énergie injectée en retour par le consommateur, qui ne peut pas être absorbée par l'accumulateur d'énergie de secours ou par le condensateur de circuit intermédiaire, en énergie thermique.

8. Installation d'énergie éolienne ou hydraulique selon une des revendications 3 à 7, **caractérisée en ce que** la tension de sortie du redresseur (1) est adaptée à la tension nominale dudit un accumulateur (8) de secours ou desdits plusieurs accumulateurs (8) d'énergie de secours.

9. Installation d'énergie éolienne ou hydraulique selon une des revendications 1 à 8, **caractérisée en ce que** le redresseur (1) présente, côté entrée, une protection (11) contre les surtensions.

10. Installation d'énergie éolienne ou hydraulique selon une des revendications 1 à 9, **caractérisée en ce que** le redresseur (1) présente un automate programmable (12).

11. Installation d'énergie éolienne ou hydraulique selon une des revendications 1 à 10, **caractérisée en ce que** le redresseur (1) et/ou au moins un des onduleurs (2) présente une interface (13) de bus de terrain.

12. Installation d'énergie éolienne ou hydraulique selon une des revendications 1 à 11, **caractérisée en ce que** l'intensité consommée du redresseur (1) est limitée.

13. Installation d'énergie éolienne ou hydraulique selon une des revendications 1 à 11, **caractérisée en ce qu'**au moins un des consommateurs (5) est un moteur à courant alternatif ou un moteur à courant continu.
